# EUROPÄISCHE PATENTSCHRIFT

(11) **EP 3 452 319 B1**
(45) Veröffentlichungstag und Bekanntmachung des Hinweises auf die Patenterteilung: **29.04.2020**
(21) Anmeldenummer: 17719285.3
(22) Anmeldetag: 26.04.2017
(51) Int. Cl.: B60J 7/02, B60J 7/043

(54) **ANORDNUNG MIT EINEM DECKEL FÜR EIN FAHRZEUGDACH, FAHRZEUGDACH FÜR EIN KRAFTFAHRZEUG UND VERFAHREN ZUM BEWEGEN EINES DECKELS FÜR EIN FAHRZEUGDACH**
ARRANGEMENT WITH A COVER FOR A VEHICLE ROOF, VEHICLE ROOF FOR A MOTOR VEHICLE AND METHOD FOR MOVING A COVER FOR A VEHICLE ROOF
ENSEMBLE COMPRENANT UN PANNEAU DE FERMETURE POUR UN TOIT DE VÉHICULE, TOIT DE VÉHICULE POUR UN VÉHICULE AUTOMOBILE ET PROCÉDÉ DE DÉPLACEMENT D'UN PANNEAU DE FERMETURE POUR UN TOIT DE VÉHICULE

(30) Priorität: 02.05.2016 DE 102016108100
(43) Veröffentlichungstag der Anmeldung: 13.03.2019
(73) Patentinhaber: Webasto SE, 82131 Stockdorf (DE)
(72) Erfinder: RIPA, Thomas, 82211 Herrsching (DE); LIPOVSKY, Christian, 80809 München (DE)
(74) Vertreter: Epping - Hermann - Fischer
(86) Internationale Anmeldenummer: PCT/EP2017/059964
(87) Internationale Veröffentlichungsnummer: WO 2017/191016

(56) Entgegenhaltungen:
- EP-A1- 0 657 316
- EP-A1- 2 607 125
- DE-A1-102012 106 545
- DE-B3-102014 016 950

## Beschreibung

Die Erfindung betrifft eine Anordnung mit mindestens einem Deckel für ein Fahrzeugdach, der ausgehend von einer Schließstellung zum Öffnen mittels einer ersten Hebelmechanik anhebbar und in eine Öffnungsrichtung in eine Offenstellung verschiebbar ist. Die Erfindung betrifft weiter ein Verfahren zum Bewegen eines Deckels für ein Fahrzeugdach sowie ein Fahrzeugdach für ein Kraftfahrzeug.

Anordnungen mit einem Deckel für ein Fahrzeugdach sind beispielsweise als Spoilerdächer bekannt und werden bei einem Öffnungsvorgang zum Beispiel mittels eines Antriebsschlittens in Richtung eines Fahrzeughecks verschoben. In seitlichen Bereichen des Deckels sind beispielsweise Führungsmechaniken vorgesehen, um den Deckel in eine Lüfterstellung anzuheben, bevor er weiter nach hinten in Öffnungsrichtung in eine Offenstellung zum Freigeben der Dachöffnung verschoben wird. Eine solche Anordnung, die ein Ausstellen und Verschieben eines Deckels ermöglicht, ist zum Beispiel in den Dokumenten DE 10 2011018151 A1 und EP 0 657 316 A1 beschrieben.

Die dazu befähigten Führungsmechaniken weisen zum Beispiel Hebel, Lager und/oder Kulissenführungen auf. Um einen kontrollierten Öffnungsvorgang des Deckels und ein Freigeben der Dachöffnung zu ermöglichen, ist eine sichere und zuverlässige Funktion der zusammenwirkenden Komponenten erforderlich.

Der Erfindung liegt daher die Aufgabe zugrunde, eine Anordnung mit einem Deckel für ein Fahrzeugdach, ein Verfahren zum Bewegen eines Deckels für ein Fahrzeugdach und ein Fahrzeugdach für ein Kraftfahrzeug zu schaffen, die jeweils ein zuverlässiges und sicheres Öffnen und Schließen des Deckels zum Freigeben einer zugehörigen Dachöffnung ermöglichen.

Eine erfindungsgemäße Anordnung für ein Fahrzeugdach umfasst einen Deckel, der zum Öffnen mittels einer ersten Hebelmechanik in einem Bereich einer ersten Deckelkante anhebbar und in einer Öffnungsrichtung über das Fahrzeugdach in eine Offenstellung verschiebbar ist. Die erste Hebelmechanik weist eine erste Führungsschiene und einen ersten Ausstellhebel auf, welcher schwenkbar mit dem Deckel gekoppelt ist, um zwischen einem eingestellten ersten Zustand und einem ausgestellten zweiten Zustand zu wechseln, wobei der erste Ausstellhebel in dem ersten Zustand relativ zu der ersten Führungsschiene ortsfest gelagert ist und in dem zweiten Zustand eine Bewegung des ersten Ausstellhebels relativ zu der ersten Führungsschiene in Öffnungsrichtung freigegeben ist. Die erste Hebelmechanik umfasst weiter einen ersten Betätigungshebel, welcher in dem ersten Zustand schwenkbar mit dem ersten Ausstellhebel gekoppelt ist und zum Ausstellen des ersten Ausstellhebels in Öffnungsrichtung verschiebbar ist und welcher in dem zweiten Zustand von dem ersten Ausstellhebel entkoppelt ist. Außerdem umfasst die erste Hebelmechanik einen Sperr- und Mitnahmemechanismus, welcher dazu ausgebildet ist, den ersten Ausstellhebel in dem ausgestellten zweiten Zustand mittels eines ersten und eines zweiten Anschlagselements in seiner Position relativ zu dem Deckel zu arretieren und mit dem Deckel entlang der Öffnungsrichtung mitzunehmen.

Mittels der beschriebenen Anordnung ist ein zuverlässiges und sicheres Aufrichten und Verschieben des Deckels über das Fahrzeugdach möglich. Insbesondere ermöglicht die beschriebene Anordnung einen platzsparenden Aufbau und ein vollständiges Freigeben einer zugehörigen Dachöffnung in dem Fahrzeugdach, sodass eine Durchsicht nicht durch den Deckel eingeschränkt wird. Die erste Hebelmechanik realisiert mittels des Sperr- und Mitnahmemechanismus eine sichere Fixierung des ersten Ausstellhebels in dem ausgestellten zweiten Zustand, ohne zusätzliche Verriegelungselemente, wie separate Bolzen oder Federn, zu benötigen und leistet einen Beitrag für einen unkomplizierten und bauraumreduzierten Aufbau.

Dadurch, dass der Ausstellhebel in dem ausgestellten zweiten Zustand von dem Betätigungshebel entkoppelt und mittels der Anschlagselemente des Sperr- und Mitnahmemechanismus in seiner Ausrichtung gesichert ist, kann dieser mit dem Deckel in Öffnungsrichtung weiter verschoben werden, sodass die zugehörige Dachöffnung zu dem Deckel vollständig freigegeben werden kann. Insbesondere ist dies auch unter Verwendung eines weiteren Deckels vorteilhaft, der beispielweise bezogen auf eine Fahrzeuglängsachse und ein Fahrzeugheck eines zugehörigen Kraftfahrzeugs hinter dem beschriebenen Deckel in dem Fahrzeugdach angeordnet ist. Somit kann zum Beispiel ein Doppelspoilerdach für ein Kraftfahrzeug realisiert werden, das mittels der beschriebenen Anordnung ein sicheres und umfangreiches Freigeben der zugehörigen Dachöffnung, insbesondere in dem vorderen Bereich des Fahrzeugdachs, ermöglicht.

Der Sperr- und Mitnahmemechanismus realisiert mittels des ersten und zweiten Anschlagselements auf einfache und zuverlässige Weise eine sichere Arretierung des ersten Ausstellhebels in der ausgestellten Position, sodass dieser eine vorgegebene Neigung beispielsweise relativ zu einem Boden der Führungsschiene oder zu dem Deckel beibehält. Die Neigung des ausgestellten ersten Ausstellhebels sowie seine Position relativ zu dem Deckel, insbesondere bei einem vollständigen Verschieben des Deckels, sind auf eine Geometrie und ein Gewicht beziehungsweise eine Gewichtsverteilung des Deckels abgestimmt. Somit werden mittels des Sperr- und Mitnahmemechanismus ein unkontrolliertes Kippen des ersten Ausstellhebels vermieden und ein stabiler und sicherer Halt sowie ein nutzbringendes Abstützverhältnis des aufgerichteten Deckels ausgebildet.

Darüber hinaus ist der Sperr- und Mitnahmemechanismus dazu ausgebildet, den ausgestellten und entkoppelten ersten Ausstellhebel mittels der Anschlagselemente entlang der Öffnungsrichtung mitzunehmen und beispielsweise geführt in der ersten Führungsschiene anzutreiben. Eine solche Mitnahme des ersten Ausstellhebels beinhaltet eine Übergabebewegung des ausgestellten Ausstellhebels, die durch ein kontrolliertes Koppeln der Anschlagelemente mit dem ersten Ausstellhebel realisiert ist. Zum Beispiel weisen die Anschlagselemente eine vorgegebene Elastizität auf, um eine schonende Kopplung mit dem ersten Ausstellhebel zu ermöglichen, sodass mittels des Sperr- und Mitnahmemechanismus eine elasto-kinematische Bewegung realisiert, bei der der ausgestellte Ausstellhebel übernommen und arretiert wird.

Dabei ist es vorteilhaft, den Sperr- und Mitnahmemechanismus mit seinen Anschlagselementen so auszubilden und auf den ersten Ausstellhebel abzustimmen, dass eine solche Übergabebewegung und Arretieren in einer Totpunktposition des ersten Ausstellhebels erfolgt, in welcher keine oder nur geringe Kräfte durch die Last des Deckels bezüglich der Öffnungsrichtung auf den ersten Ausstellhebel wirken. Geringe Abweichungen von der Totpunktposition des ersten Ausstellhebels sind in Bezug auf die Öffnungsrichtung nahezu kraftfrei, sodass ein gewisses Spiel vorhanden ist, den ausgestellten Ausstellhebel kontrolliert und zuverlässig zu arretieren und mitzunehmen. Auf diese Weise ist eine einfache und widerstandsarme Übergabe des ausgestellten Ausstellhebels realisierbar.

Gemäß einer Weiterbildung der Anordnung umfasst die erste Hebelmechanik ein erstes Lager, wobei der erste Ausstellhebel schwenkbar mit dem ersten Lager gekoppelt ist und der erste Ausstellhebel und das erste Lager relativ zu der Führungsschiene verschiebbar ausgebildet sind. Ausgehend von einer Schließstellung des Deckels sind bei einem Öffnen des Deckels mittels der ersten Hebelmechanik, der entkoppelte erste Ausstellhebel und das erste Lager über eine Schließposition einer ersten Deckelkante des Deckels hinaus in Öffnungsrichtung verschiebbar. Das erste Anschlagselement ist dann zum Beispiel an dem Lager angeordnet und realisiert eine Auflage für eine Unterseite des ersten Ausstellhebels, welche diese kontaktiert, wenn der erste Ausstellhebel aufgerichtet wird und in den zweiten Zustand wechselt.

Gemäß einer Weiterbildung umfasst die Anordnung einen Deckelträger, mit dem der erste Ausstellhebel schwenkbar und verschiebbar gekoppelt ist und mittels dessen der Deckel mit dem Fahrzeugdach koppelbar ist, wobei das zweite Anschlagselement an dem Deckelträger angeordnet ist. Beispielsweise ist das zweite Anschlagselement als eine separate Komponente oder als ein Teil einer weiteren Komponente an einer vorgegebenen Position an dem Deckelträger angeordnet, um ein zuverlässiges und sicheres Koppeln mit dem ersten Ausstellhebel sowie ein kontrolliertes Mitnehmen des ersten Ausstellhebels zu ermöglichen. Die Position des zweiten Anschlagelements an dem Deckelträger ist vorteilhafterweise so vorgegeben, dass eine Übergabe des ausgestellten ersten Ausstellhebels in seiner Totpunktposition relativ zu dem Deckel erfolgt.

Gemäß einer Weiterbildung der Anordnung ist das zweite Anschlagselement als ein Teil einer Kulisse an dem Deckelträger ausgebildet. Auf diese Weise ist das zweite Anschlagselement einfach und kostengünstig als ein Teil einer Kulisse realisierbar, die beispielsweise benötigt wird, um den Deckel für ein Verschieben über das Fahrzeugdach auszurichten. Somit wird keine zusätzliche Komponente benötigt, sondern eine vorhandene Komponente lediglich geringfügig modifiziert, um das zweite Anschlagselement auszubilden.

Gemäß einer Weiterbildung der Anordnung sind das erste und/oder zweite Anschlagselement mittels Spritzgießens ausgebildet. Eine solche Ausgestaltung des ersten und/oder zweiten Anschlagselements realisiert eine kostengünstige und einfache Möglichkeit, die beiden Anschlagselemente mit gewünschten Geometrien an vorgegebenen Positionen auf jeweiligen Komponenten auszubilden und anzupassen. Auf diese Weise können das erste und/oder das zweite Anschlagselement hinsichtlich ihrer Form an eine Kontur des ersten Ausstellhebels oder anderer Komponenten angepasst werden, die bei dem Arretieren des ersten Ausstellhebels mit dem oder den Anschlagselementen in Kontakt gebracht wird. Insbesondere können das erste und/oder zweite Anschlagselement mittels Um- oder Anspritzens an vorgesehene Komponenten ausgebildet werden, um je nach verwendeter Länge verwendeter Mechaniken auf einfache und kostengünstige Weise eine notwendige Länge beziehungsweise Geometrie sowie Position des oder der Anschlagselemente auszubilden.

Gemäß einer Weiterbildung der Anordnung umfasst die erste Hebelmechanik einen ersten Gleiter, welcher den Deckelträger mit dem ersten Ausstellhebel verschiebbar koppelt und welcher bei einem Öffnungsvorgang des Deckels mit dem zweiten Anschlagselement koppelbar und mittels dessen in Öffnungsrichtung mitnehmbar ist. Das zweite Anschlagselement realisiert somit eine Anlage für den Gleiter an einer Oberseite des ausgestellten ersten Ausstellhebels und ermöglicht ein zuverlässiges und sicheres Arretieren und Abstützen sowie eine kontrollierte Mitnahme des ausgestellten und entkoppelten ersten Ausstellhebels.

Gemäß einer Weiterbildung der Anordnung weist jeweils das erste und/oder das zweite Anschlagselement ein Elastomer mit vorgegebener elastischer Eigenschaft auf. Die Anschlagselemente sind als Auf- oder Anlagen ausgebildet, um den ersten Ausstellhebel in dem zweiten Zustand bei einem Öffnungsvorgang zu kontaktieren oder mit diesem zu koppeln und dadurch festzuhalten und mitzunehmen. Mittels elastischer Anschlagselemente kann eine schonende Kopplung realisiert werden und vorhandene Bauteiltoleranzen können ausgeglichen werden.

Beispielsweise ist das erste und/oder zweite Anschlagselement als Gummipuffer ausgebildet, sodass ein kostengünstiger, schonender und zugleich sicherer Kontakt zu dem ersten Ausstellhebel ausbildbar ist. Das erste Anschlagselement ist zum Beispiel als ein solcher Gummipuffer an dem Lager angeordnet oder in einer dafür vorgesehenen Ausnehmung des Lagers positioniert und drückt den ausgestellten Ausstellhebel gegen eine Wand des ersten Betätigungshebels. In dieser Position verharrt der ausgestellte erste Ausstellhebel, bis das zweite Anschlagselement in Anlage gebracht wird, den ersten Ausstellhebel arretiert und im weiteren Verlauf in Öffnungsrichtung mitnimmt. Dabei kann die beschriebene Wand eine begrenzende Innenfläche einer Kulissenführung sein, die an dem Betätigungshebel ausgebildet ist und die in dem ersten Zustand mit einem Kopplungselement des ersten Ausstellhebels in Eingriff steht. Somit wird der ausgestellte erste Ausstellhebel mittels des ersten Anschlagselements gegen den ersten Betätigungshebel vorgegeben vorgespannt.

Darüber hinaus ermöglichen elastische Anschlagselemente ein gewisses Spiel beim Arretieren und Mitnehmen des ersten Ausstellhebels und überbrücken beziehungsweise gleichen vorhandene Bauteiltoleranzen aus und tragen zu einer zuverlässigen und sicheren Funktion des Sperr- und Mitnahmemechanismus und der Anordnung bei.

Gemäß einer Weiterbildung der Anordnung umfasst die erste Hebelmechanik einen Schlitten, der zum Öffnen des Deckels mittels eines Antriebs in Öffnungsrichtung in der Führungsschiene verschiebbar ausgebildet ist und der derart mit dem Betätigungshebel gekoppelt ist, dass er ein Ausstellen, Entkoppeln und Mitnehmen des ersten Ausstellhebels steuert. Eine solche Weiterbildung der Anordnung beschreibt eine vorteilhafte Möglichkeit, einen Antrieb zum Bewegen des Deckels zu realisieren, in dem ein Schlitten mit den beschriebenen Mechaniken zusammenwirkt, um ein Ausstellen, ein Entkoppeln und ein Mitnehmen des ausgestellten ersten Ausstellhebels zu realisieren.

Gemäß einer Weiterbildung umfasst die Anordnung einen weiteren Deckel, der zum Öffnen mittels einer zweiten Hebelmechanik in einem Bereich einer zweiten Deckelkante anhebbar und in die Öffnungsrichtung über das Fahrzeugdach in eine Offenstellung verschiebbar ist. Dabei weist die zweite Mechanik eine zweite Führungsschiene und einen zweiten Ausstellhebel auf, welcher schwenkbar mit dem weiteren Deckel sowie schwenkbar mit einem bezüglich der zweiten Führungsschiene ortsfesten zweiten Lager gekoppelt ist. Der zweite Ausstellhebel und das ortsfeste zweite Lager sind in Bezug auf die Öffnungsrichtung vor einer zweiten Schließposition angeordnet.

Mittels dieser Weiterbildung der Anordnung ist ein Doppelspoilerdach für ein Fahrzeugdach mit vollverschiebbarem vorderem Deckel realisierbar, welches bei Bedarf ein vollständiges Freigeben der vorderen Dachöffnung mittels der zuvor beschriebenen Anordnung ermöglicht. Die beiden Deckel können so angeordnet und ausgebildet sein, dass sie eine zusammenhängende oder zwei separate Dachöffnung freigeben und verschließen. Die erste und zweite Führungsschiene des zugehörigen Deckels können als eine gemeinsame Führungsschiene ausgebildet sein oder beispielsweise als baugleiche Führungsschienen miteinander stoff-, form- und/oder kraftschlüssig verbunden sein. Auf diese Weise kann ein zuverlässiges und sicheres Gleiten des vorderen Deckels in den Bereich des hinteren Deckels ermöglich werden, dadurch dass der erste Ausstellhebel, das erste Lager und/oder der erste Schlitten auch einen Gleitkanal der zweiten Führungsschiene nutzen und ein vollständiges Freigeben der Dachöffnung ermöglichen.

Ein erfindungsgemäßes Fahrzeugdach für ein Kraftfahrzeug umfasst eine vordere Dachöffnung und eine hintere Dachöffnung sowie zumindest eine der zuvor beschriebenen Anordnungen mit einem vorderen und einem hinteren Deckel, welche zum Verschließen und Freigeben der zugehörigen vorderen und hinteren Dachöffnung ausgebildet sind.

Ein erfindungsgemäßes Verfahren zum Bewegen eines Deckels für ein Fahrzeugdach umfasst ein Aufstellen eines ersten Ausstellhebels mittels eines ersten Betätigungshebels einer ersten Hebelmechanik und dadurch Anheben einer ersten Deckelkante des Deckels. Dabei wechselt der erste Ausstellhebel von einem ersten Zustand, in dem der erste Ausstellhebel relativ zu einer Führungsschiene ortsfest gelagert und schwenkbar mit dem ersten Betätigungshebel gekoppelt ist, in einen zweiten Zustand, in dem der erste Ausstellhebel von dem ersten Betätigungshebel entkoppelt ist und eine Bewegung des ersten Ausstellhebels relativ zu der Führungsschiene in eine Öffnungsrichtung des Deckels freigegeben wird. Das Verfahren umfasst weiter ein Arretieren des ausgestellten ersten Ausstellhebels mittels eines Sperr- und Mitnahmemechanismus, indem der erste Ausstellhebel einerseits mit einem ersten Anschlagselement und andererseits mit einem zweiten Anschlagselement koppelt. Außerdem umfasst das Verfahren ein Mitnehmen des ausgestellten und arretierten ersten Ausstellhebels entlang in Öffnungsrichtung des Deckels mittels des Sperr- und Mitnahmemechanismus zum Freigeben einer Dachöffnung in dem Fahrzeugdach.

Ein solches Verfahren und das zuvor beschriebene Fahrzeugdach korrespondieren zu der zuvor beschriebenen erfindungsgemäßen Anordnung, sodass sämtliche Eigenschaften und Merkmale der zuvor beschriebenen Anordnungen auch für das Verfahren und das Fahrzeugdach offenbart sind und umgekehrt.

Ausführungsbeispiele der Erfindung sind im Folgenden anhand der schematischen Zeichnungen näher erläutert. Es zeigen:
- Figur 1: ein Fahrzeugdach mit zwei Deckeln in perspektivischer Ansicht,
- Figur 2: ein Ausführungsbeispiel einer Hebelmechanik zum Bewegen eines Deckels in dem Fahrzeugdach in perspektivischer Ansicht,
- Figuren 3A-3C: vergrößerte perspektivische Ansichten der Hebelmechanik,
- Figur 4: eine vergrößerte perspektivische Ansicht eines Teils der Hebelmechanik,
- Figur 5: eine vergrößerte perspektivische Ansicht eines Teils der Hebelmechanik,
- Figur 6: eine vergrößerte perspektivische Ansicht eines Teils der Hebelmechanik,
- Figuren 7A-7B: weitere perspektivische Ansichten der Hebelmechanik, und
- Figuren 8A-8B: weitere perspektivische Ansichten der Hebelmechanik.

Elemente gleicher Konstruktion oder Funktion sind figurenübergreifend mit den gleichen Bezugszeichen gekennzeichnet. Bereits mit Hilfe von Bezugszeichen beschriebene Elemente oder Merkmale sind nicht zwingend in sämtlichen Figuren mit Bezugszeichen versehen.

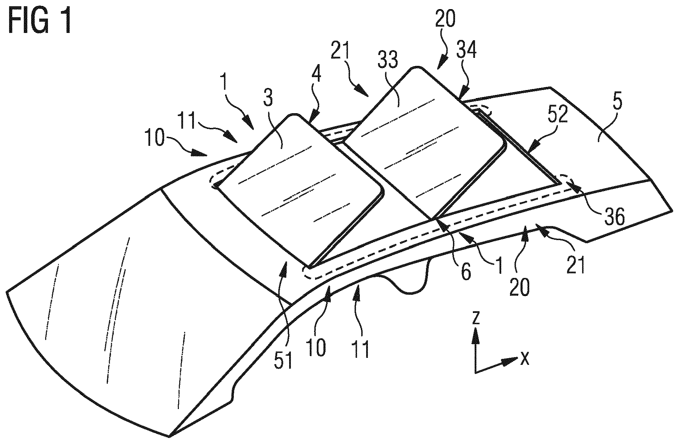

Figur 1 zeigt in einer perspektivischen Ansicht eine schematische Darstellung eines Fahrzeugdachs 5 für ein Kraftfahrzeug. Das Fahrzeugdach 5 weist eine vordere Dachöffnung 51 und eine hintere Dachöffnung 52 auf, die mittels verschiebbarer Deckel 3 und 33 wahlweise verschließbar und freigebbar sind. Der vordere Deckel 3 ist der vorderen Dachöffnung 51 und der hintere Deckel 33 ist der hinteren Dachöffnung 52 zugeordnet. Die Dachöffnungen 51 und 52 können als ein jeweiliger Abschnitt einer durchgehenden Dachöffnung oder als zwei separate Dachöffnungen ausgebildet sein.

Das Fahrzeugdach 5 hat vorzugsweise beidseitig angeordnete Führungsschienen 11 und 21, wobei die ersten Führungsschienen 11 dem vorderen Deckel 3 und die zweiten Führungsschienen 21 dem hinteren Deckel 33 zugeordnet sind. Vorteilhafterweise bilden die erste und die zweite Führungsschiene 11 und 21 der jeweiligen Deckel 3 und 33 eine gemeinsame Führungsschiene aus. Bezogen auf die Öffnungs- und Schließrichtung der Deckel 3, 33 sind die Führungsschienen 11, 21 zum Beispiel hintereinander angeordnet und miteinander gekoppelt. Beispielsweise sind die erste und zweite Führungsschiene 11 und 21 form-, kraft- und/oder stoffschlüssig miteinander gekoppelt oder als eine einzige Führungsschiene einstückig ausgebildet. Mittels einer gemeinsamen Führungsschiene für den vorderen und hinteren Deckel 3, 33 ist eine kostengünstige Anordnung 1 realisierbar, die zudem eine vereinfachte Montage ermöglicht.

Der vordere Deckel 3 weist eine erste Deckelkante 4 und der hintere Deckel 33 eine zweite Deckelkante 34 auf. In einer Schließstellung des jeweiligen Deckels 3, 33 bestimmen die jeweiligen Deckelkanten 4, 34 eine jeweilige Schließposition 6, 36. Die Deckel 3 und 33 sind vorzugsweise als Glasdeckel ausgebildet und realisieren hintereinander angeordnete Spoilerdächer.

In diesem Zusammenhang verwendete Orts- oder Richtungsangaben wie "hinten" und "vorne" sowie "oben" und "unten" beziehen sich auf eine übliche Fahrtrichtung eines betriebsbereiten Kraftfahrzeugs. Eine Fahrzeuglängsachse kann auch als Horizontale bezeichnet werden und entspricht in der dargestellten Figur 1 der eingezeichneten x-Achse. Das Ausstellen bzw. Anheben der Deckel 3, 33 erfolgt im Wesentlichen in einer Vertikalrichtung beziehungsweise gemäß dem eingezeichneten Koordinatensystem in z-Richtung. Somit ist unter dem hinteren Bereich des jeweiligen Deckels 3, 33 beispielsweise der Bereich zu verstehen, welcher ausgehend von einer Mitte des jeweiligen Deckels 3, 33 einem Fahrzeugheck zugewandt ist. Die erste Deckelkante 4 kann daher auch als hintere Deckelkante des Deckels 3 bezeichnet werden.

Das Fahrzeugdach 5 weist seitlich positionierte Anordnungen 1 auf, die dem Zweck dienen, die Deckel 3 und 33 aus einer Schließstellung in eine Offenstellung zu verschieben und wieder zu verschließen. Hierzu weisen die Anordnungen 1 Hebelmechaniken 10 und 20 auf, mittels derer die Deckel 3 und 33 über einen hinteren Teil des Fahrzeugdachs 5 geschoben werden können. In diesem Zusammenhang ist es erforderlich, dass die Deckel 3 und 33 angehoben werden, da sie in Schließstellung bündig mit der Oberseite des Fahrzeugdachs 5 schließen. Bei einem typischen Bewegungsablauf wird zunächst die jeweilige hintere Deckelkante 4, 34 des jeweiligen Deckels 3, 33 ausgestellt. Eine solche Zwischenposition wird auch als Lüfterstellung bezeichnet. Im weiteren Verlauf des Öffnungsprozesses wird der jeweilige Deckel 3, 33 in eine Öffnungsrichtung nach hinten über das Fahrzeugdach 5 in die Offenstellung verschoben.

Das Verschieben der Deckel 3, 33 über das Fahrzeugdach 5 bedeutet, dass der Deckel 3, 33 nach einem Anheben oder Ausstellen im Bereich der jeweiligen hinteren Deckelkante 4, 34 über eine Außenseite des Fahrzeugdachs 5 geschoben wird. Bevorzugt handelt es sich bei den Anordnungen 1 um eine Anordnung für ein Spoilerdach oder mehrere Spoilerdächer, die zum Beispiel hintereinander angeordnet sind, sodass zum Beispiel ein Zweideckelspoiler-Fahrzeugdach mit vollverschiebbarem vorderen Deckel 3 realisierbar ist.

In der weiteren Figurenbeschreibung wird primär auf eine Bewegung des vorderen Deckels 3 in Bezug auf eine Seite des Kraftfahrzeugs eingegangen. Vorzugsweise sind die Komponenten spiegelbildlich zueinander bezüglich der Fahrzeuglängsachse des Kraftfahrzeugs auf beiden Seiten der Dachöffnungen 51 und 52 ausgebildet und angeordnet. Der hintere Deckel 33 kann analog zu dem vorderen Deckel 3 mittels der zweiten Hebelmechanik 20 vollverschiebbar ausgebildet sein, sodass auch die hintere Dachöffnung 52 wunschgemäß komplett freigegeben werden kann. In anderen Ausgestaltungen der Anordnung 1 ist der hintere Deckel 33 nicht vollständig verschiebbar ausgebildet und bietet die Möglichkeit einer Lüfterstellung und einer Offenstellung, bei der der zweite Ausstellhebel und das zweite Lager stets vor der zweiten Schließposition 36 der zweiten Deckelkante 34 angeordnet sind.

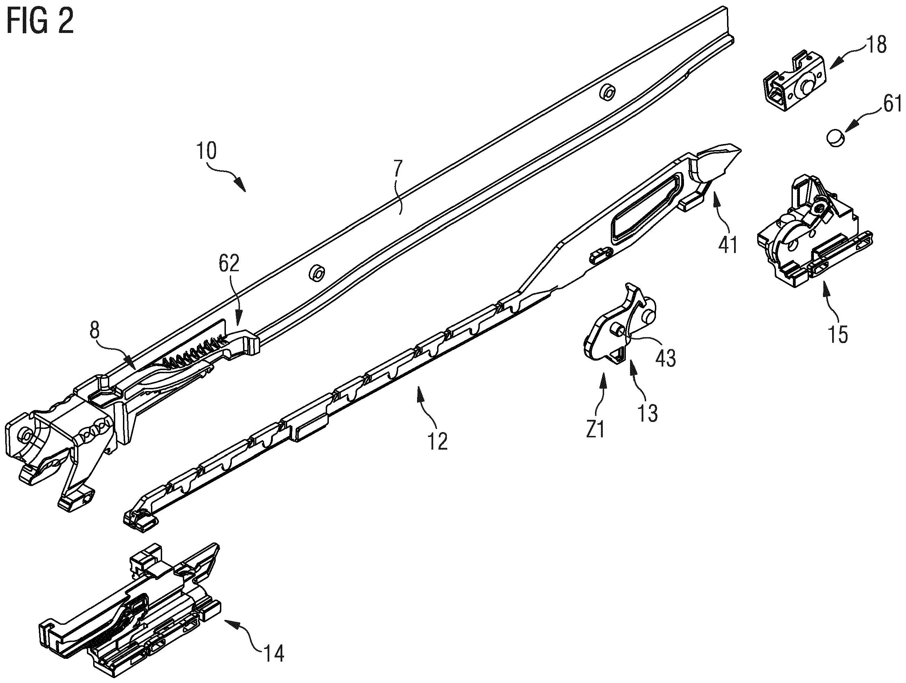

Figur 2 illustriert in einer perspektivischen Ansicht ein Ausführungsbeispiel der ersten Hebelmechanik 10 in einem nicht zusammengebauten Zustand. Die erste Hebelmechanik 10 weist unter anderem einen Deckelträger 7 auf, mittels dessen der Deckel 3 mit der Führungsschiene 11 und dem Fahrzeugdach 5 verschiebbar koppelbar ist. Der Deckel 3 ist mechanisch fest mit dem Deckelträger 7 gekoppelt, sodass ein Verschieben des vorderen Deckels 3 gleichbedeutend mit einem Verschieben des Deckelträgers 7 ist. Weiter umfasst die erste Hebelmechanik 10 ein erstes Lager 15 sowie einen ersten Ausstellhebel 13, welcher schwenkbar mit dem Deckelträger 7 sowie schwenkbar mit dem ersten Lager 15 koppelbar ist.

In einem montierten Zustand der Hebelmechanik 10 und der Anordnung 1 kann der erste Ausstellhebel 13 zwischen einem eingestellten ersten Zustand Z1 und einem ausgestellten zweiten Zustand Z2 wechseln, wobei der erste Ausstellhebel 13 in dem ersten Zustand Z1 relativ zu der ersten Führungsschiene 11 ortsfest gelagert ist und in dem zweiten Zustand Z2 eine Bewegung des ersten Ausstellhebels 13 relativ zu der ersten Führungsschiene 11 in Öffnungsrichtung freigegeben ist. Ein solches Ausstellen und Einstellen des ersten Ausstellhebels 13 kann mittels eines ersten Schlittens 14, der beispielsweise mittels eines Antriebs in der Führungsschiene 11 verschiebbar angeordnet ist, und mittels eines erste Betätigungshebels 12 realisiert werden. Dabei ist der erste Betätigungshebel 12 einerseits mit dem Schlitten 14 und andererseits mit dem ersten Ausstellhebel 13 gekoppelt ist. In dem eingestellten ersten Zustand Z1 ist der erste Betätigungshebel 12 schwenkbar mit dem ersten Ausstellhebel 13 gekoppelt und zum Ausstellen des ersten Ausstellhebels 13 in Öffnungsrichtung verschiebbar angeordnet. In dem ausgestellten zweiten Zustand Z2 ist der erste Ausstellhebel 13 vom dem Betätigungshebel 12 entkoppelt und kann mittels des Schlittens 14 entlang der Öffnungsrichtung verschoben werden.

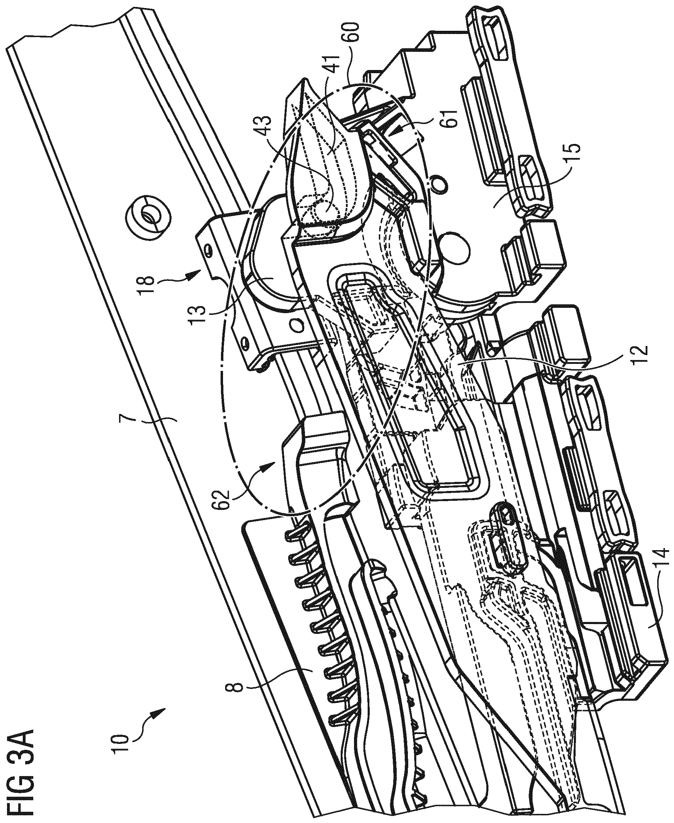

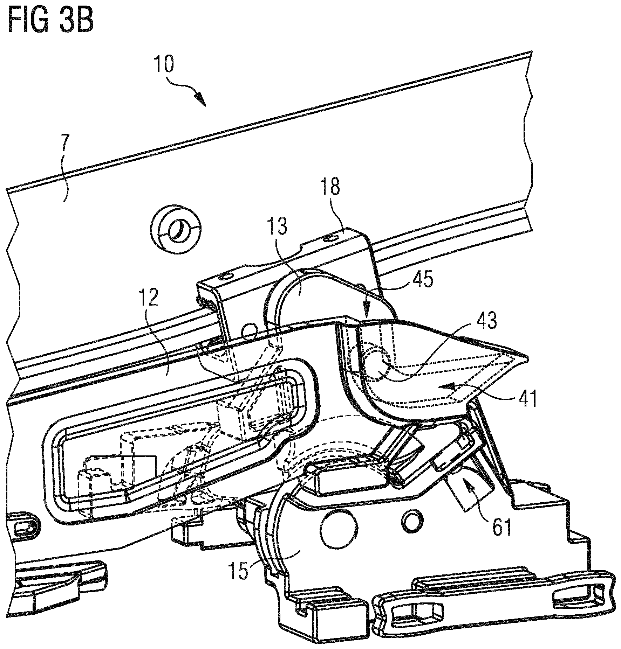

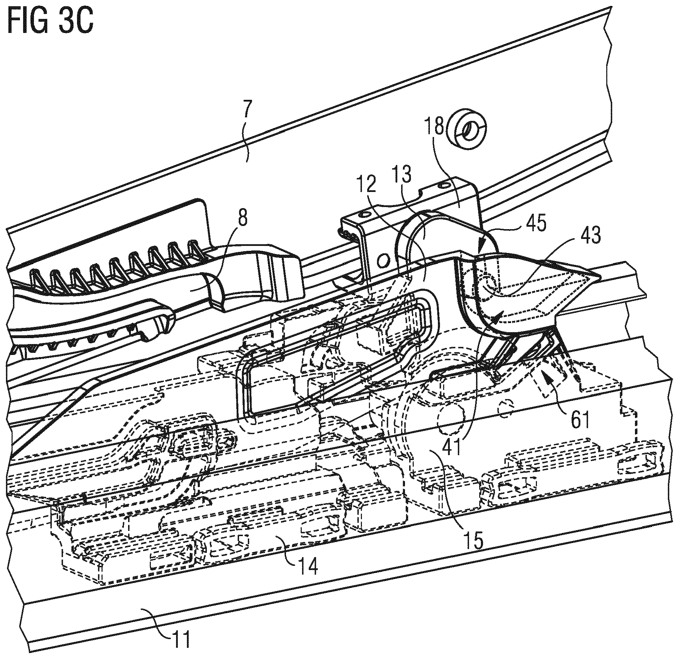

Um ein sichere Position und eine vorgegebene Neigung des ausgestellten ersten Ausstellhebels 13 relativ zu dem Deckel 3 oder relativ zu dem Lager 15 in dem zweiten Zustand Z2 zu realisieren, ist der erste Ausstellhebel 13 mittels eines einen Sperr- und Mitnahmemechanismus 60 auf einfache und zuverlässige Weise arretierbar (s. Figur 3A). Zu diesem Zweck weist der Sperr- und Mitnahmemechanismus 60 ein erstes und ein zweites Anschlagselement 61 und 62 auf, mittels derer der erste Ausstellhebel in dem ausgestellten zweiten Zustand Z2, in dem er von dem ersten Betätigungshebel (12) entkoppelt ist, arretiert und mit dem Deckel 3 entlang der Öffnungsrichtung mitgenommen werden kann.

Der Sperr- und Mitnahmemechanismus 60 realisiert somit eine Übernahme des ausgestellten ersten Ausstellhebels 13 in dem entkoppelten zweiten Zustand Z2 von dem entkoppelten Betätigungshebel 12 und nimmt den in seiner Neigung fixierten ersten Ausstellhebel 13 bei einem weiteren Öffnen des Deckels 3 in Öffnungsrichtung mit, um die zugehörige Dachöffnung 51 vollständig freizugeben.

Auf diese Weise ist eine platzsparende und kostengünstige Anordnung 1 für das Fahrzeugdach 5, insbesondere mit zwei Deckeln 3 und 33, realisierbar, bei der mittels der beschriebenen ersten Hebelmechanik 10 der vordere Deckel 3 die vordere Dachöffnung 51 vollumfänglich freigeben kann. Eine Durchsicht wird somit nicht behindert und das platzsparende Anordnen der ersten Hebelmechanik 10 mit dem Sperr- und Mitnahmemechanismus 60 zeichnet sich durch geringe Anzahl benötigter Bauteile und geringe Beanspruchung von Bauraum aus. Bevorzugt handelt es sich bei der Anordnung 1 um eine Anordnung für Spoilerdächer, wobei in anderen Ausgestaltungen auch mehr als zwei Deckel im Fahrzeugdach 5 angeordnet sein können.

Figuren 3A bis 3C zeigen jeweils eine vergrößerte perspektivische Ansicht der ersten Hebelmechanik 10 in einem zusammengebauten Zustand im Bereich des Sperr- und Mitnahmemechanismus 60 und des ersten Ausstellhebels 13. Anhand dieser Figuren ist ersichtlich, dass in dem dargestellten Ausführungsbeispiel das erste Anschlagselement 61 an dem Lager 15 angeordnet ist und beispielsweise als Gummipuffer in einer vorgesehenen Ausnehmung des Lagers 15 positioniert ist, um eine schonende Auflage für einen Kontakt mit dem ersten Ausstellhebel 13 auszubilden. Das zweite Anschlagselement 62 ist an dem Deckelträger 7 angeordnet und beispielsweise im Rahmen eines Spritzgussprozesses einstückig mit einer Kulisse 8 an dem Deckelträger 7 ausgebildet. Die Kulisse 8 ist zum Beispiel in Abstimmung mit der Bewegung der hinteren Deckelkante 4 zum Ausrichten einer vorderen Deckelkante des Deckels 3 ausgebildet.

Außerdem ist anhand der detaillierten Ansichten in den Figuren 3A bis 3C zu erkennen, dass der erste Betätigungshebel 12 eine erste Kulisse 41 mit einem nach oben offenen Kanal aufweist, welcher in Eingriff mit einem Kopplungselement 43 des ersten Ausstellhebel 13 ist. Eine solche Ausgestaltung der ersten Hebelmechanik 10 ermöglicht ein vollständiges Verschieben des vorderen Deckels 3 beziehungsweise komplettes Freigeben der zugehörigen Dachöffnung 51 mittels Entkoppeln des ersten Ausstellhebels 13 und des ersten Lagers 15 von dem ersten Betätigungshebel 12 sowie mittels Arretieren und Mitnehmen des ersten Ausstellhebels 13 entlang der Öffnungsrichtung.

Bei einem Öffnungsvorgang des vorderen Deckels 3 kann dieser aufgrund der beschriebenen Anordnung 1 den hinteren Deckel 33 gegebenenfalls überfahren. Der Begriff "Überfahren" bedeutet im vorliegenden Kontext, dass der vordere Deckel 3 während des Verschiebens zumindest in einem hinteren Bereich eine Vertikalbewegung vollführt, also eine Bewegung nach oben in z-Richtung. Bei einem weiteren Verschieben oder vollständigen Öffnen des vorderen Deckels 3 wird dieser über den hinteren Deckel 33 geführt.

Das erste Lager 15 ist so in der ersten Führungsschiene 11 integriert, dass dieses die Schienenkanäle der ersten Führungsschiene 11 als Gleitbahn nutzt. Dabei kann es den Boden der ersten Führungsschiene 11 kontaktieren und so eine zuverlässige Führung des Deckels 3 realisieren. Als Boden der ersten Führungsschiene 11 wird zum Beispiel der Teil der ersten Führungsschiene 11 bezeichnet, welcher annähernd parallel zu dem Fahrzeugdach 5 des Kraftfahrzeugs unterhalb des ersten Lagers 15 verläuft.

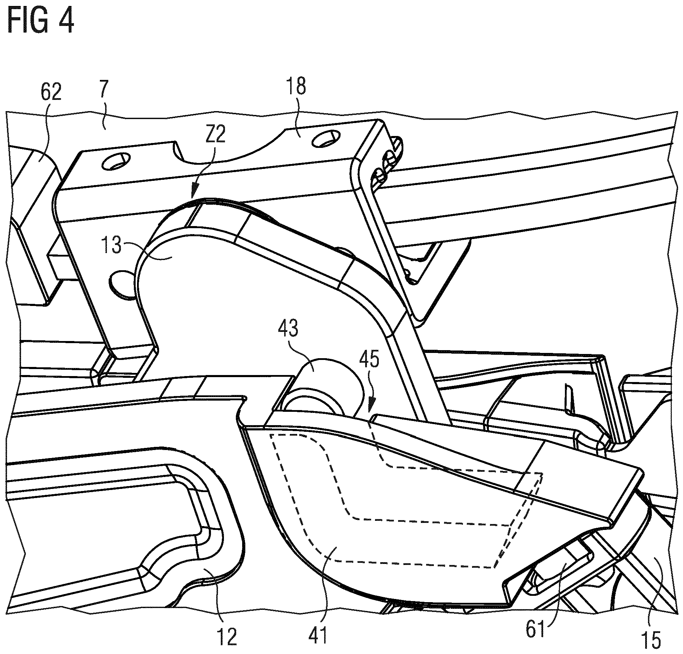

Das erste Ausstellhebel 13 ist mittels eines ersten Gleiters 18 mit dem Deckelträger 7 verschiebbar gekoppelt und realisiert so auf einfache Weise ein Aufrichten und Verschieben des Deckels 3. Ausgehend von einer Schließstellung kann ein Öffnungsprozess des Deckels 3 beispielsweise wie folgt durchgeführt werden:
Zum Ausstellen des Deckels 3 wird der erste Ausstellhebel 13 mittels des ersten Schlittens 14 und des ersten Betätigungshebels 12 nach hinten verschoben. Dabei wird der eingestellte erste Ausstellhebel 13 bezüglich einer Schwenkachse relativ zu dem ersten Lager 15 verschwenkt, sodass der Deckel 3 an der ersten Deckelkante 4 angehoben wird. Auf diese Weise wird zum Beispiel die Lüfterstellung des Deckels 3 erreicht. Da der erste Ausstellhebel 13 dabei die Last des Deckels 3 aufnehmen muss, wird dieser mit seinem Kopplungselement 43 mittels des ersten Anschlagselements 61 gegen eine Innenwand der Kulisse 41 gedrückt und im Bereich eines oberen freien Endes 45 der Kulisse 41 vorgegeben verspannt (s. Figur 4).

Das erste Anschlagselement 61 ist insbesondere hinsichtlich seiner Form und seiner Materialeigenschaften derart ausgebildet, dass ein schonender Kontakt und eine zuverlässige Vorspannung des ersten Ausstellhebels 13 gegen die Kulisse 41 des ersten Betätigungshebels 12 realisiert ist, um eine gewünschte Neigung und Position des ausgestellten ersten Ausstellhebels 13 in dem zweiten Zustand Z2 relativ zum Deckel 3 zu auszubilden. Auf diese Weise ist mittels des vorgegeben geneigten ersten Ausstellhebels 13 ein gutes Abstützverhältnis des Deckels 3 realisierbar, um somit ein zuverlässiges Tragen der Lasten des Deckels 3 zu ermöglichen. Vorteilhafterweise ist der erste Ausstellhebel 13 in diesem ausgestellten zweiten Zustand Z2 in einer sogenannten Totpunktlage bezogen auf die Form und das Gewicht des Deckels 3 ausgerichtet, in welcher keine oder nur geringe Kräfte in x-Richtung auf den ersten Ausstellhebel 13 wirken.

Die Kulisse 41 ist am oberen freien Ende 45 nach hinten (in Öffnungsrichtung) offen, sodass sich der erste Ausstellhebel 13 mittels des Kopplungselements 43 lediglich an dem ersten Betätigungshebel 12 abstützt, aber im Wesentlichen von diesem entkoppelt ist. Im weiteren Verlauf der Öffnungsbewegung wird der Deckel 3 mittels des ersten Schlittens 14 weiter in Öffnungsrichtung nach hinten über das Fahrzeugdach 5 in die Offenstellung verschoben. Der Schlitten 14 nimmt den Deckelträger 7 und den Deckel 3 mit und schiebt diesen über das Fahrzeugdach 5 in die Offenstellung. Zu diesem Zweck ist der Deckelträger 7 über den Gleiter 18 verschiebbar mit dem ersten Ausstellhebel 13 gekoppelt, so dass der Deckel 3 relativ bezüglich der ersten Führungsschiene 11 über den ausgestellten ersten Ausstellhebel 13 hinweg verschoben werden kann.

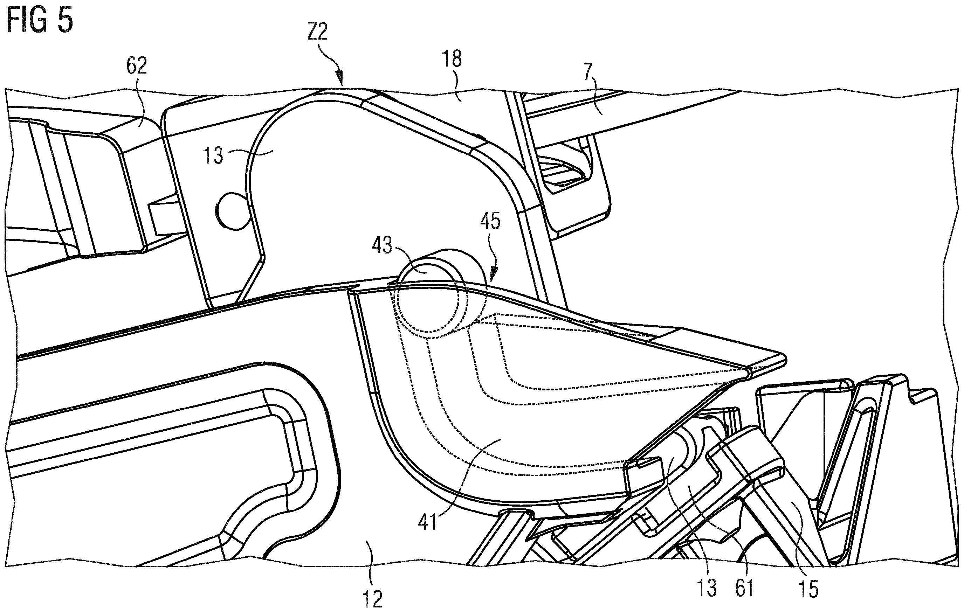

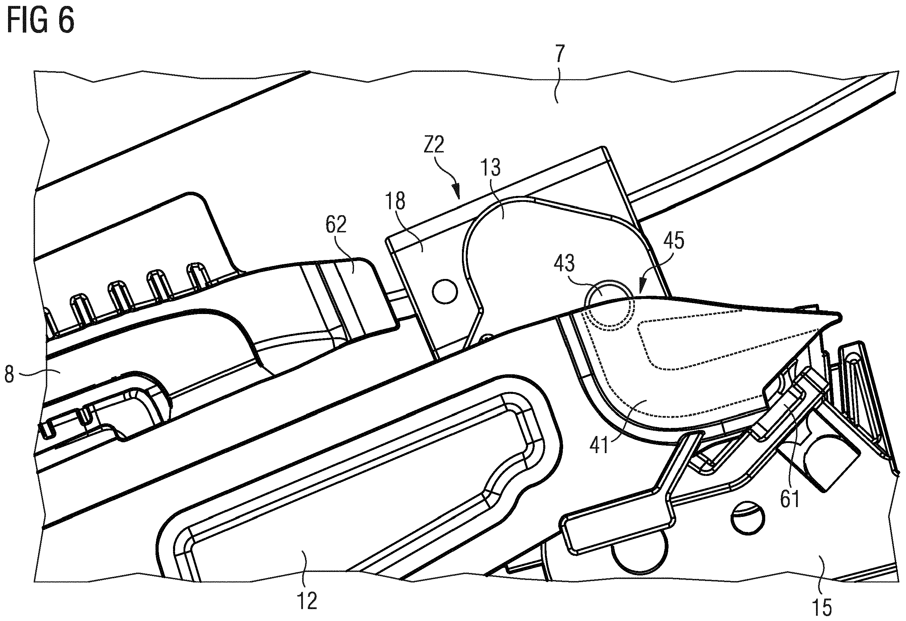

Bei einem weiteren Verschieben des ersten Schlittens 14 in Öffnungsrichtung koppelt das an dem Deckelträger 7 angeordnete zweite Anschlagselement 62 mit dem Gleiter 18 und arretiert dadurch die ausgestellte Position des ersten Ausstellhebels 13 in dem zweiten Zustand Z2. Der erste Ausstellhebel 13 ist somit einerseits durch das erste und andererseits durch das zweite Anschlagselement 61 und 62 in seiner Neigung fixiert, sodass ein unkontrolliertes Kippen des ersten Ausstellhebels 13 verhindert wird. In den Figuren 4 bis 6 ist ein Zustand der Anordnung 1 zu sehen kurz bevor das zweite Anschlagselement 62 den Gleiter 18 kontaktiert.

Infolge eines weiteren Verfahrens des ersten Schlittens 14 und Verschieben des Deckels 3 wird der arretierte erste Ausstellhebel 13 durch das zweite Anschlagselement 62 in Öffnungsrichtung mitgenommen, sodass auch kein anliegender Kontakt mehr zwischen dem ersten Betatätigungshebel 12 und dem ersten Ausstellhebel 13 besteht und der erste Ausstellhebel 13 und das erste Lager 15 angetrieben von dem ersten Schlitten 14 innerhalb der ersten Führungsschiene 11 nach hinten gleiten können. Auf diese Weise wird ein vollständiges Verschieben des vorderen Deckels 3 über den hinteren Deckel 33 ermöglicht.

Beispielsweise wird bei einem solchen vollständigen Verschieben des Deckels 3 der erste Schlitten 14 direkt mit dem ersten Lager 15 gekoppelt und schiebt dieses innerhalb der ersten Führungsschiene 11 in Öffnungsrichtung vor sich her. Alternativ koppelt der erste Schlitten 14 mittels weiterer Elemente mit dem ersten Lager 15 und treibt so den entkoppelten ersten Ausstellhebel 13 und das erste Lager 15 zu einer Bewegung in Richtung des Fahrzeughecks an. Ein Koppeln des ersten Schlittens 14 mit dem ersten Lager 15 kann zum Beispiel mittels eines Sperrhebels erfolgen, sodass das erste Lager 15 von dem ersten Schlitten 14 angetrieben wird und mit diesem über die Schließposition 6 der hinteren Deckelkante 4 hinaus in Öffnungsrichtung verschiebbar ist. Eine mögliche Variante einer solchen Kopplung zwischen dem Schlitten 14 und dem Lager 15 ist beispielsweise in der taggleich vom selben Anmelder eingereichten Anmeldung vorzufinden (internes Aktenzeichen des Vertreters: P2016,0502; internes Aktenzeichen des Anmelders: R1756-16, Titel der Anmeldung: Anordnung mit zwei Deckeln für ein Fahrzeugdach, Fahrzeugdach für ein Kraftfahrzeug sowie Verfahren). Gemäß weiterer Ausführungsformen sind aber auch andere Varianten der Kopplung zwischen dem ersten Schlitten 14 und dem ersten Lager 15 möglich.

Bei dem Gleiten des ersten Ausstellhebels 13 und des ersten Lagers 15 überschreiten diese, gegebenenfalls zusammen mit dem Schlitten 14, die Schließposition 6 der ersten Deckelkante 4 und ermöglichen somit ein vollständiges Freigeben der Dachöffnung 51. Die erste Führungsschiene 11 ist entsprechend derart ausgebildet, dass das erste Lager 15 weit genug nach hinten gleiten kann, um den Deckel 3 vollständig zu verschieben und gegebenenfalls über den hinteren Deckel 33 zu führen. Ein Schließvorgang des oder der Deckel 3, 33 kann entsprechend zu dem beschriebenen Öffnungsprozess in einer im Wesentlichen inversen Bewegungsabfolge durchgeführt werden.

Mittels der beschriebenen Anordnung 1 wird somit auf einfache Weise ein Spoilerkonzept mit einem Sperr- und Mitnahmemechanismus 60 für den ersten Ausstellhebel 13 verwirklicht, das insbesondere für ein Doppelspoilerdach geeignet ist. Es werden keine zusätzlichen Komponenten, wie Verriegelungsbolzen und Koppelelemente, benötigt, sondern vorhandene Komponenten so modifiziert, dass zusätzliche Funktionen wie das Arretieren und Mitnehmen ermöglicht sind. Somit ist mittels der beschriebenen ersten Hebelmechanik 10 ein robustes und platzsparendes Design der dargestellten Anordnung 1 realisierbar.

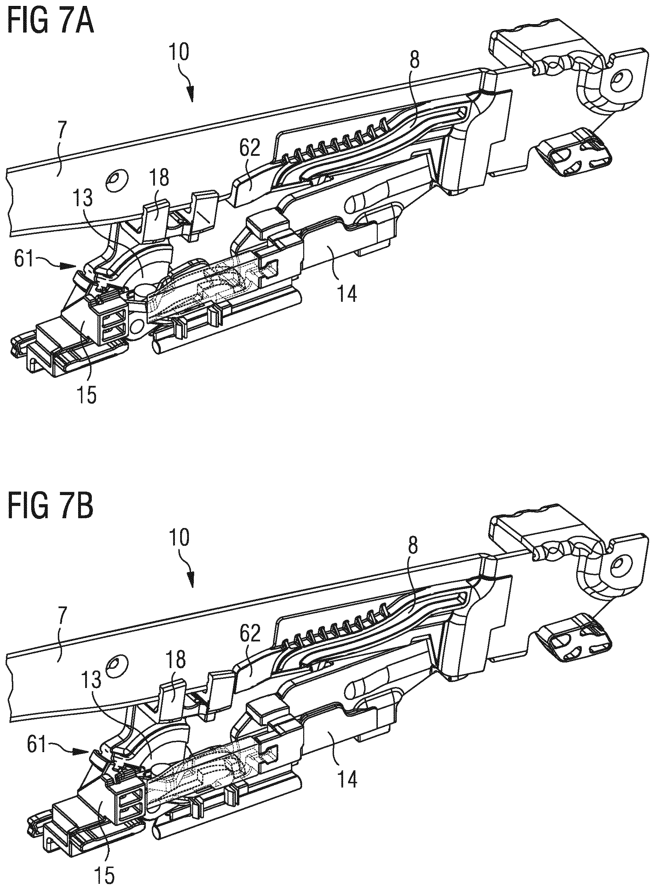

Figuren 7A und 7B zeigen weitere perspektivische Ansichten der ersten Hebelmechanik 10 kurz bevor ein Kontakt zwischen dem zweiten Anschlagselement 62 und dem Gleiter 18 ausgebildet ist (Figur 7A) und in einem Zustand, in dem ein solcher Kontakt ausgebildet ist (Figur 7B). Durch den vorderen und hinteren Anschlag, die durch das erste und zweite Anschlagselement 61 und 62 realisiert sind, braucht der erste Ausstellhebel 13 in seiner ausgestellten Position zum Verfahren nicht separat verriegelt werden. Es ist vorteilhaft, dass auf dem letzten Teil des Weges, kurz bevor das zweite Anschlagselement 62 mit dem Gleiter 18 koppelt, während der Deckelträger 7 über den ausgestellten Ausstellhebel 13 verfahren wird, das erste Lager 15 schon von der ersten Führungsschiene 11 entriegelt wird und anfängt zu verfahren. Dadurch wird eine Relativbewegung zwischen dem zweiten Anschlagselement 62 und dem ersten Ausstellhebel 13 verlangsamt, bis sie am Anschlag zum stehen kommt. Somit kann eine schonende Kopplung des zweiten Anschlagelements 62 und des Gleiters 18 durchgeführt werden.

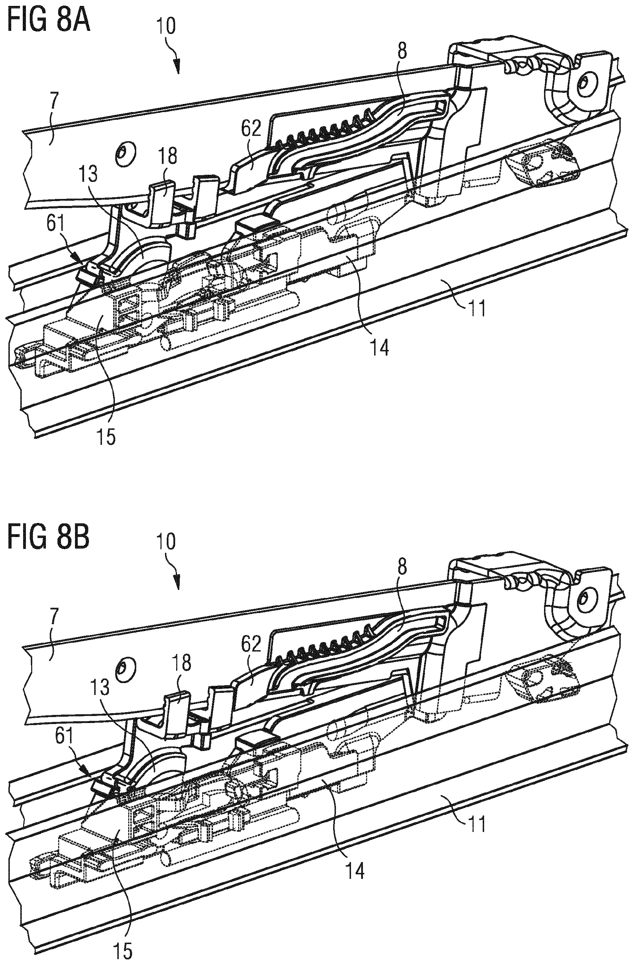

Die Figuren 8A und 8B zeigen jeweils eine weitere perspektivische Ansicht der ersten Hebelmechanik 10 nach den Figuren 7A und 7B und ihrer Anordnung innerhalb der ersten Führungsschiene 11.

### Bezugszeichenliste

- 1: Anordnung
- 3: Deckel
- 4: erste Deckelkante
- 5: Fahrzeugdach
- 6: Schließposition erste Deckelkante
- 7: Deckelträger
- 8: Kulisse
- 10: erste Hebelmechanik
- 11: erste Führungsschiene
- 12: erster Betätigungshebel
- 13: erster Ausstellhebel
- 14: erster Schlitten
- 15: erstes Lager
- 18: erster Gleiter
- 19: Boden erste Führungsschiene
- 20: zweite Hebelmechanik
- 21: zweite Führungsschiene
- 33: weiterer Deckel
- 34: zweite Deckelkante
- 36: zweite Schließposition
- 41: erste Kulisse
- 43: erstes Kopplungselement
- 45: oberes Ende der ersten Kulisse
- 51: vordere Dachöffnung
- 52: hintere Dachöffnung

## Patentansprüche

1. Anordnung (1) mit einem Deckel (3) für ein Fahrzeugdach (5), bei der
- der Deckel (3) zum Öffnen mittels einer ersten Hebelmechanik (10) in einem Bereich einer ersten Deckelkante (4) anhebbar und in eine Öffnungsrichtung über das Fahrzeugdach (5) in eine Offenstellung verschiebbar ist, wobei die erste Hebelmechanik (10)
-- eine erste Führungsschiene (11) und einen ersten Ausstellhebel (13) aufweist, welcher schwenkbar mit dem Deckel (3) gekoppelt ist, um zwischen einem eingestellten ersten Zustand (Z1) und einem ausgestellten zweiten Zustand (Z2) zu wechseln, wobei der erste Ausstellhebel (13) in dem ersten Zustand (Z1) relativ zu der ersten Führungsschiene (11) ortsfest gelagert ist und in dem zweiten Zustand (Z2) eine Bewegung des ersten Ausstellhebels (13) relativ zu der ersten Führungsschiene (11) in Öffnungsrichtung freigegeben ist, **dadurch gekennzeichnet, dass** die Anordnung
-- einen ersten Betätigungshebel (12) aufweist, welcher in dem ersten Zustand (Z1) schwenkbar mit dem ersten Ausstellhebel (13) gekoppelt ist und zum Ausstellen des ersten Ausstellhebels (13) in Öffnungsrichtung verschiebbar ist und welcher in dem zweiten Zustand (Z2) von dem ersten Ausstellhebel (13) entkoppelt ist, und
-- einen Sperr- und Mitnahmemechanismus (60) aufweist, welcher dazu ausgebildet ist, den ersten Ausstellhebel (13) in dem ausgestellten zweiten Zustand (Z2) mittels eines ersten und eines zweiten Anschlagselements (61, 62) in seiner Position relativ zu dem Deckel (3) zu arretieren und mit dem Deckel (3) entlang der Öffnungsrichtung mitzunehmen.

2. Anordnung (1) nach Anspruch 1, bei der die erste Hebelmechanik (10) weiter ein erstes Lager (15) umfasst, das schwenkbar mit dem ersten Ausstellhebel (13) gekoppelt ist, wobei der erste Ausstellhebel (13) und das erste Lager (15) relativ zu der Führungsschiene (11) verschiebbar ausgebildet sind, sodass ausgehend von einer Schließstellung des Deckels (3) bei einem Öffnen des Deckels (3) mittels der ersten Hebelmechanik (10) der entkoppelte erste Ausstellhebel (13) und das erste Lager (15) über eine Schließposition (6) einer ersten Deckelkante (4) des Deckels (3) hinaus in Öffnungsrichtung verschiebbar sind, und wobei das erste Anschlagselement (61) an dem Lager (15) angeordnet ist.

3. Anordnung (1) nach Anspruch 1 oder 2, die weiter einen Deckelträger (7) umfasst, mit dem der erste Ausstellhebel (13) schwenkbar und verschiebbar gekoppelt ist und mittels dessen der Deckel (3) mit dem Fahrzeugdach (5) koppelbar ist, wobei das zweite Anschlagselement (62) an dem Deckelträger (7) angeordnet ist.

4. Anordnung (1) nach Anspruch 3, bei der das zweite Anschlagselement (62) als ein Teil einer Kulisse (8) an dem Deckelträger (7) ausgebildet ist.

5. Anordnung (1) nach Anspruch 3 oder 4, bei der die erste Hebelmechanik (10) weiter einen ersten Gleiter (18) umfasst, welcher den Deckelträger (7) mit dem ersten Ausstellhebel (13) verschiebbar koppelt und welcher bei einem Öffnen des Deckels (3) mit dem zweiten Anschlagselement (62) koppelbar und mittels dessen in Öffnungsrichtung mitnehmbar ist.

6. Anordnung (1) nach einem der Ansprüche 1 bis 5, bei der das erste und/oder das zweite Anschlagselement (61, 62) mittels Spritzgießens ausgebildet sind.

7. Anordnung (1) nach einem der Ansprüche 1 bis 6, bei der jeweils das erste und/oder das zweite Anschlagselement (61, 62) ein Elastomer mit vorgegebener elastischer Eigenschaft aufweisen.

8. Anordnung (1) nach einem der Ansprüche 1 bis 7, bei der die erste Hebelmechanik (10) weiter einen ersten Schlitten (14) umfasst, der zum Öffnen des Deckels (3) mittels eines Antriebs in Öffnungsrichtung in der Führungsschiene (11) verschiebbar ausgebildet ist und der derart mit dem ersten Betätigungshebel (12) gekoppelt ist, dass er ein Ausstellen, Entkoppeln und Mitnehmen des ersten Ausstellhebels (13) steuert.

9. Anordnung (1) nach einem der Ansprüche 1 bis 8, weiter umfassend
- einen weiteren Deckel (33), der zum Öffnen mittels einer zweiten Hebelmechanik (20) in einem Bereich einer zweiten Deckelkante (34) anhebbar und in die Öffnungsrichtung über das Fahrzeugdach (5) in eine Offenstellung verschiebbar ist,
- wobei die zweite Hebelmechanik (20) eine zweite Führungsschiene (21) und einen zweiten Ausstellhebel aufweist, welcher schwenkbar mit dem weiteren Deckel (33) sowie schwenkbar mit einem bezüglich der zweiten Führungsschiene (21) ortsfesten zweiten Lager gekoppelt ist, und
- wobei der zweite Ausstellhebel und das ortsfeste zweite Lager in Bezug auf die Öffnungsrichtung vor einer zweiten Schließposition (36) angeordnet sind.

10. Fahrzeugdach (5) für ein Kraftfahrzeug, umfassend
- eine vordere Dachöffnung (51) und eine hintere Dachöffnung (52), und
- eine Anordnung (1) nach Anspruch 9, wobei der Deckel (3) zum Verschließen und Freigeben der vorderen Dachöffnung (51) und der weitere Deckel (33) zum Verschließen und Freigeben der hinteren Dachöffnung (52) zugeordnet ist.

11. Verfahren zum Bewegen eines Deckels (3) für ein Fahrzeugdach (5), umfassend
- Aufstellen eines ersten Ausstellhebels (13) mittels eines ersten Betätigungshebels (12) einer ersten Hebelmechanik (10) und dadurch Anheben einer ersten Deckelkante (4) des Deckels (3), wobei der erste Ausstellhebel (13) von einem ersten Zustand (Z1), in dem der erste Ausstellhebel (13) relativ zu einer Führungsschiene (11) ortsfest gelagert und schwenkbar mit dem ersten Betätigungshebel (12) gekoppelt ist, in einen zweiten Zustand (Z2) wechselt, in dem der erste Ausstellhebel (13) von dem ersten Betätigungshebel (12) entkoppelt ist und eine Bewegung des ersten Ausstellhebels (13) relativ zu der Führungsschiene (11) in eine Öffnungsrichtung des Deckels (3) freigegeben ist,
- Arretieren des ausgestellten ersten Ausstellhebels (13) mittels eines Sperr- und Mitnahmemechanismus (60), indem der erste Ausstellhebel (13) einerseits mit einem ersten Anschlagselement (61) und andererseits mit einem zweiten Anschlagselement (62) koppelt, und
- Mitnehmen des ausgestellten und arretierten ersten Ausstellhebels (13) entlang Öffnungsrichtung des Deckels (3) mittels des Sperr- und Mitnahmemechanismus (60) zum Freigeben und Verschließen einer Dachöffnung (51) in dem Fahrzeugdach (5).

## Claims

1. Arrangement (1) with a cover (3) for a vehicle roof (5), in which
- the cover (3) can, for the purposes of opening, be raised in a region of a first cover edge (4), and displaced in an opening direction over the vehicle roof (5) into an open position, by means of a first lever mechanism (10), wherein the first lever mechanism (10)
-- has a first guide rail (11) and a first deployment lever (13), which is pivotably coupled to the cover (3) in order to change between a retracted first state (Z1) and a deployed second state (Z2), wherein, in the first state (Z1), the first deployment lever (13) is mounted in a positionally fixed manner relative to the first guide rail (11) and, in the second state (Z2), a movement of the first deployment lever (13) relative to the first guide rail (11) in the opening direction is enabled, **characterized in that** the arrangement
-- has a first actuating lever (12) which, in the first state (Z1), is pivotably coupled to the first deployment lever (13) and can be displaced in the opening direction for the purposes of deploying the first deployment lever (13) and which, in the second state (Z2), is decoupled from the first deployment lever (13), and
-- has a locking and driving mechanism (60) which is formed such that the first deployment lever (13), in the deployed second state (Z2), is retained in its position relative to the cover (3), by said locking and driving mechanism and driven together with the cover (3) in the opening direction, by means of a first and a second stop element (61, 62).

2. Arrangement (1) according to Claim 1, in which the first lever mechanism (10) also comprises a first bearing (15) which is pivotably coupled to the first deployment lever (13), wherein the first deployment lever (13) and the first bearing (15) are formed as displaceable relative to the guide rail (11) such that, starting from a closed position of the cover (3), when the cover (3) is being opened by means of the first lever mechanism (10), the decoupled first deployment lever (13) and the first bearing (15) can be displaced in the opening direction beyond a closed position (6) of a first cover edge (4) of the cover (3), and wherein the first stop element (61) is arranged on the bearing (15).

3. Arrangement (1) according to Claim 1 or 2, also comprising a cover carrier (7) to which the first deployment lever (13) is pivotably and displaceably coupled and by means of which the cover (3) can be coupled to the vehicle roof (5), wherein the second stop element (62) is arranged on the cover carrier (7) .

4. Arrangement (1) according to Claim 3, in which the second stop element (62) is formed as a part of a guide slot (8) on the cover carrier (7).

5. Arrangement (1) according to Claim 3 or 4, in which the first lever mechanism (10) also comprises a first slider (18) which displaceably couples the cover carrier (7) to the first deployment lever (13) and which, when the cover (3) is being opened, can be coupled to the second stop element (62) and can be driven in the opening direction by means of said second stop element.

6. Arrangement (1) according to one of Claims 1 to 5, in which the first and/or the second stop element (61, 62) are formed by means of injection moulding.

7. Arrangement (1) according to one of Claims 1 to 6, in which the first and/or the second stop element (61, 62) respectively have/has an elastomer with a predefined elastic property.

8. Arrangement (1) according to one of Claims 1 to 7, in which the first lever mechanism (10) also comprises a first carriage (14) which is formed as displaceable in the guide rail (11) in the opening direction by means of a drive for the purposes of opening the cover (3) and which is coupled to the first actuating lever (12) in such a manner that said first carriage controls a deployment, decoupling and driving of the first deployment lever (13).

9. Arrangement (1) according to one of Claims 1 to 8, also comprising
- a further cover (33) which can, for the purposes of opening, be raised in a region of a second cover edge (34), and displaced in the opening direction over the vehicle roof (5) into an open position, by means of a second lever mechanism (20),
- wherein the second lever mechanism (20) has a second guide rail (21) and a second deployment lever which is pivotably coupled to the further cover (33) as well as pivotably coupled to a second bearing which is positionally fixed with respect to the second guide rail (21), and
- wherein the second deployment lever and the positionally fixed second bearing are arranged upstream of a second closed position (36) in relation to the opening direction.

10. Vehicle roof (5) for a motor vehicle, comprising
- a front roof opening (51) and a rear roof opening (52), and
- an arrangement (1) according to Claim 9, wherein the cover (3) is assigned to the front roof opening (51) for the purposes of closing and opening the latter and the further cover (33) is assigned to the rear roof opening (52) for the purposes of closing and opening the latter.

11. Method for moving a cover (3) for a vehicle roof (5), comprising
- deploying a first deployment lever (13) by means of a first actuating lever (12) of a first lever mechanism (10) and, as a result, raising a first cover edge (4) of the cover (3), wherein the first deployment lever (13) changes from a first state (Z1), in which the first deployment lever (13) is mounted in a positionally fixed manner relative to a guide rail (11) and is pivotably coupled to the first actuating lever (12), into a second state (Z2), in which the first deployment lever (13) is decoupled from the first actuating lever (12) and a movement of the first deployment lever (13) relative to the guide rail (11) in an opening direction of the cover (3) is enabled,
- retaining the deployed first deployment lever (13) by means of a locking and driving mechanism (60), by virtue of the fact that the first deployment lever (13) is coupled firstly to a first stop element (61) and secondly to a second stop element (62), and
- driving the deployed and retained first deployment lever (13) in the opening direction of the cover (3) by means of the locking and driving mechanism (60) for the purposes of opening and closing a roof opening (51) in the vehicle roof (5).

## Revendications

1. Ensemble (1) pourvu d'un couvercle (3) destiné à un toit de véhicule (5) sur lequel
- pour l'ouverture à l'aide d'un premier mécanisme à levier (10), le couvercle (3) peut se soulever dans une zone d'une première arête de couvercle (4) et se déplacer dans une direction d'ouverture par-dessus le toit de véhicule (5) dans une position d'ouverture, le premier mécanisme à levier (10)
-- comportant une première glissière de guidage (11) et un premier levier de déploiement (13), lequel est accouplé de manière à pouvoir pivoter avec le couvercle (3), pour changer entre une première position rabattue (Z1) et une deuxième position déployée (Z2), dans la première position (Z1), le premier levier de déploiement (13) étant logé de manière stationnaire par rapport à la première glissière de guidage (11) et dans la deuxième position (Z2), un déplacement du premier levier de déploiement (13) par rapport à la première glissière de guidage (11) étant libéré dans la direction d'ouverture, **caractérisé en ce que** l'agencement
-- comporte un premier levier de manœuvre (12), lequel dans la première position (Z1) est accouplé de manière à pouvoir pivoter avec le premier levier de déploiement (13) et est déplaçable dans la direction d'ouverture, pour déployer le premier levier de déploiement (13) et lequel dans la deuxième position (Z2) est désaccouplé du premier levier de déploiement (13), et
-- comporte un mécanisme de blocage et d'entraînement (60), lequel est conçu pour arrêter le premier levier de déploiement (13) dans la deuxième position déployée (Z2) au moyen d'un premier et deuxième élément de butée (61, 62) dans sa position par rapport au couvercle (3) et l'entraîner avec le couvercle (3) le long de la direction d'ouverture.

2. Ensemble (1) selon la revendication 1, dans lequel le premier mécanisme à levier (10) comprend par ailleurs un premier palier (15) qui est accouplé de manière à pouvoir pivoter avec le premier levier de déploiement (13), le premier levier de déploiement (13) et le premier palier (15) étant conçus de manière à pouvoir pivoter par rapport à la glissière de guidage (11), de sorte qu'en partant d'une première position de fermeture du couvercle (3), lors d'une ouverture du couvercle (3) au moyen du premier mécanisme à levier (10), le premier levier de déploiement (13) désaccouplé et le premier palier (15) soient déplaçables au-delà d'une position de fermeture (6) d'une première arête de couvercle (4) du couvercle (3) dans la direction d'ouverture et le premier élément de butée (61) étant placé sur le palier (15).

3. Ensemble (1) selon la revendication 1 ou 2, qui comprend par ailleurs un support de couvercle (7) avec lequel le premier levier de déploiement (13) est accouplé de manière à pouvoir pivoter et se déplacer et au moyen duquel le couvercle (3) est susceptible d'être accouplé avec le toit du véhicule (5), le deuxième élément de butée (62) étant placé sur le support de couvercle (7).

4. Ensemble (1) selon la revendication 3, dans lequel le deuxième élément de butée (62) est conçu en tant qu'une partie d'une coulisse (8) sur le support de couvercle (7) .

5. Ensemble (1) selon la revendication 3 ou 4, dans lequel le premier mécanisme à levier (10) comprend par ailleurs un premier patin (18), lequel accouple de manière déplaçable le support de couvercle (7) avec le premier levier de déploiement (13) et lequel, lors d'une ouverture du couvercle (3) est susceptible d'être accouplé avec le deuxième élément de butée (62) et est susceptible d'être entraîné dans la direction d'ouverture au moyen de celui-ci.

6. Ensemble (1) selon l'une quelconque des revendications 1 à 5, dans lequel le premier et/ou le deuxième élément de butée (61, 62) sont conçus par moulage par injection.

7. Ensemble (1) selon l'une quelconque des revendications 1 à 6, dans lequel respectivement le premier et/ou le deuxième élément de butée (61, 62) comportent un élastomère faisant preuve d'une propriété élastique prédéfinie.

8. Ensemble (1) selon l'une quelconque des revendications 1 à 7, dans lequel le premier mécanisme à levier (10) comprend par ailleurs un premier chariot (14) qui, pour ouvrir le couvercle (3) est conçu de manière déplaçable au moyen d'un entraînement dans la direction d'ouverture dans la glissière de guidage (11) et qui est accouplé avec le premier levier de manœuvre (12), de telle sorte qu'il commande un déploiement, un désaccouplement et un entraînement du premier levier de déploiement (13).

9. Ensemble (1) selon l'une quelconque des revendications 1 à 8, comprenant par ailleurs
- un couvercle (33) supplémentaire, qui pour l'ouverture est susceptible d'être soulevé au moyen d'un deuxième mécanisme à levier (20), dans la zone d'une deuxième arête de couvercle (34) et qui est déplaçable dans la direction d'ouverture par-dessus le toit du véhicule (5), dans une position d'ouverture,
- le deuxième mécanisme à levier (20) comportant une deuxième glissière de guidage (21) et un deuxième levier de déploiement, lequel est accouplé de manière à pouvoir pivoter avec le couvercle (33) supplémentaire et de manière à pouvoir pivoter avec un deuxième palier stationnaire en rapport à la deuxième glissière de guidage (21), et
- le deuxième levier de déploiement et le deuxième palier stationnaire étant placés en rapport à la direction d'ouverture à l'avant d'une deuxième position de fermeture (36).

10. Toit de véhicule (5) pour un véhicule automobile, comprenant
- une ouverture de toit (51) antérieure et une ouverture de toit (52) postérieure, et
- un ensemble (1) selon la revendication 9, le couvercle (3) étant destiné à fermer et à libérer l'ouverture de toit (51) antérieure et le couvercle (33) supplémentaire étant destiné à fermer et à libérer l'ouverture de toit (52) postérieure.

11. Procédé destiné à faire bouger un couvercle (3) pour un toit de véhicule (5), comprenant
- le déploiement d'un premier levier de déploiement (13) au moyen d'un premier levier de manœuvre (12) d'un premier mécanisme à levier (10) et de ce fait le soulèvement d'une première arête de couvercle (4) du couvercle (3), le premier levier de déploiement (13) passant d'une première position (Z1) dans laquelle le premier levier de déploiement (13) est logé de manière stationnaire par rapport à une glissière de guidage (11) et est accouplé de manière à pouvoir pivoter avec le premier levier de manœuvre (12) dans une deuxième position (Z2) dans laquelle le premier levier de déploiement (13) est désaccouplé du premier levier de manœuvre (12) et un mouvement du premier levier de déploiement (13) par rapport à la glissière de guidage (11) dans une direction d'ouverture du couvercle (3) est libéré,
- le blocage du premier levier de déploiement (13) déployé au moyen d'un mécanisme de blocage et d'entraînement (60), en ce que le premier levier de déploiement (13) s'accouple d'une part avec un premier élément de butée (61) et d'autre part avec un deuxième élément de butée (62), et
- l'entraînement du premier levier de déploiement (13) déployé et bloqué le long de la direction d'ouverture du couvercle (3) au moyen du mécanisme de blocage et d'entraînement (60), pour libérer et fermer une ouverture de toit (51) dans le toit de véhicule (5).
